Europäisches Patentamt

European Patent Office

Office européen des brevets

(11) Veröffentlichungsnummer: **0 099 562**
**A2**

(12) # EUROPÄISCHE PATENTANMELDUNG

(21) Anmeldenummer: **83106968.5**

(22) Anmeldetag: **16.07.83**

(51) Int. Cl.³: **D 06 M 17/00**
**A 41 D 27/06**

(30) Priorität: **21.07.82 DE 3227144**

(43) Veröffentlichungstag der Anmeldung:
**01.02.84 Patentblatt 84/5**

(84) Benannte Vertragsstaaten:
**BE DE FR GB IT NL SE**

(71) Anmelder: Akzo GmbH
Postfach 10 01 49 Kasinostrasse 19-23
D-5600 Wuppertal-1(DE)

(72) Erfinder: Ostertag, Karl, Dr. Dipl.-Ing.
Dr. Jordanstrasse 2
D-8765 Erlenbach(DE)

(54) Verbundstoffbahn.

(57) Es wird ein Verbundstoff aus mindestens drei, durch Schweißstellen miteinander verbundenen, Schichten vorgeschlagen, bei dem zur Vermeidung von Kältebrücken und zur Verbesserung des Griffes die Schweißstellen jeweils nicht alle Schichten miteinander verbinden, sondern jeweils nur einen Teil. Er eignet sich insbesondere zur Herstellung von Bekleidung. Außerdem wird auch ein neues Verfahren zu seiner Herstellung vorgeschlagen.

FIG.1

EP 0 099 562 A2

0099562

A3GW32026 EP

## Verbundstoffbahn

**A k z o   GmbH**

**Wuppertal**

-.-.-.-.-

Die Erfindung betrifft eine Verbundstoffbahn aus mindestens
drei, durch Schweißstellen miteinander verbundenen Schichten.
Unter Schichten sind Bahnen von Folien, Schaumstoffen oder
textilen Flächengebilden wie Gewebe, Gewirke, Geflechte oder
Vliesstoffe zu verstehen. Sie sind durch Verschweißen, also
durch stellenweise Verklebung benachbarter Schichten infolge
eines zeitweiligen Einflusses von Wärme und evtl. auch von
Druck, miteinander verbunden.

Gebraucht werden solche Verbundstoffbahnen, wenn der textile
Charakter im Sinne von DIN 60 000 (Januar 1969) überwiegt,
hauptsächlich für Bekleidungszwecke. Sie dienen dann der Verbesserung des Komforts, und zwar vor allem unter dem Gesichtspunkt der Hygiene, indem sie aufgrund ihrer porösen lufteinschließenden Struktur hauptsächlich gegen·Kälte schützen.

0099562

Eine derartige textile Verbundstoffbahn aus mehreren durch
Schweißstellen miteinander verbundenen Schichten ist in dem
deutschen Gebrauchsmuster mit dem Aktenzeichen G 81 28 386.5
beschrieben. Dabei wurden alle Schichten durchgehend von der
einen zu der anderen Seite der Bahn an der Schweißstelle erwärmt, bis die thermoplastischen Polymeren genug klebrig geworden sind, und dann zusammengedrückt. Dadurch verlor die
Verbundstoffbahn an dieser Stelle ihre vorteilhafte poröse,
lufteinschließende Struktur vollständig. Sie wird praktisch
kompakt; ihre Dicke wird um mindestens die Hälfte reduziert.
Damit verschlechtert sich drastisch ihre Isolationsfähigkeit.
Es entstehen sogenannte "Kältebrücken". Ein weiterer Nachteil
der durchgehenden Schweißnaht ist, daß sie den Griff deutlich
verhärtet.

Trotz dieser Nachteile ist man - aufgrund der prinzipiellen
Vorteile des Verschweißens wie zum Beispiel Sauberkeit,
Schnelligkeit und keine zusätzlichen Hilfsstoffe - an einer
Ausweitung seiner Anwendung interessiert. Hinderlich dabei
ist unter anderem, daß mit zunehmender Dicke der Schichten
bei einigen Schweißverfahren Schwierigkeiten auftreten, zum
Beispiel beim Wärmeimpulsverfahren. Denn hierbei werden die
zu verschmelzenden Thermoplasten von außen her erwärmt. Dabei
eine optimale Verteilung der Wärme über die ganze Schweißstelle
zu erreichen, wird umso schwieriger, je dicker der thermoplastische Stoff ist, zumal er meistens ein schlechter Wärmeleiter ist.

Demgemäß besteht die Erfindungsaufgabe darin, die bekannten
Verbundstoffbahnen mit ihren von der einen zur anderen Seite
durchgehenden, jeweils alle Schichten erfassenden Schweißstellen hinsichtlich ihrer Isolierung und ihres Griffes zu zu verbessern. Darüberhinaus soll eine Möglichkeit aufgezeigt
werden, wie auch dicke Schichten mit verringerten Schwierigkeiten bezüglich der Wärmeleitung miteinander verschweißt
werden können.

Diese Aufgaben werden durch die in den Patentansprüchen angegebene Erfindung gelöst. Sie besteht hauptsächlich darin,
daß die Schweißstellen jeweils nicht alle Schichten miteinander verbinden. Besteht also zum Beispiel ein Verbundstoff aus drei Schichten, so verbinden nicht alle Schweißstellen jeweils alle drei Schichten, sondern ein Teil der
Schweißstellen verbindet die Mittelschicht nur mit der einen
Außenschicht und der andere Teil verbindet sie nur mit der
anderen Außenschicht.

Vorteilhafte Ausführungsarten der Erfindung gemäß Anspruch 1
werden in den Unteransprüchen 2 bis 6 beschrieben. Die Erfindung
wirkt sich besonders vorteilhaft aus, wenn der Verbundstoff nur
textile Flächengebilde enthält, da hierbei eine durchgehende
Schweißstelle besonders nachteilig ist, verglichen mit einem
Verbundstoff, der z.B. nur Folien enthält. Von besonderer Bedeutung sind aber auch Verbundstoffe aus textilen und nichttextilen Flächengebilden, wie z.B. Folien, wenn der textile
Charakter überwiegt, d.h. die textile Materialbeschaffenheit
der Oberfläche und/oder die für den textilen Anteil typischen
physikalisch-technologischen Eigenschaften entscheidend sind für
den Verbundstoff. Die nichttextile Schicht, z.B. eine Folie,
übt nur eine zusätzliche Funktion aus; sie macht den Verbundstoff z.B. undurchlässig für Wind und Wasser oder bietet Schutz
gegen Entflammung und Hitze. Der textile Charakter des Verbundstoffes bleibt vor allem dann erhalten, wenn nicht-textile
Schichten von geringer Dicke und hoher Geschmeidigkeit mitverwendet werden.

Mit der Ausgestaltung nach Anspruch 3 wird vor allem eine erhöhte Bindefestigkeit zwischen den einzelnen Schichten erzielt. Das bindende Polymere kann auf unterschiedliche Art
in den Schichten verteilt sein; z.B. es kann darin als Mantel-
Komponente einer Bikomponentenfaser des Kern-/Mantel-Typs
oder als Faser in einer Fasermischung enthalten sein.

Besonders vorteilhaft ist es, wenn Schichten zwei verschiedene
Polymere mit unterschiedlichen Schmelzbereichen enthalten,
z.B. Polyamid 6 und Polyamid 6.6. Dadurch wird vor allem sowohl eine gute Verklebung durch die Komponente mit dem
niedrigeren Schmelzbereich als auch eine weitgehende Erhaltung
der Faserstruktur der höherschmelzenden Komponente erreicht.

Es gibt mehrere Möglichkeiten, die beanspruchte Verbundstoffbahn herzustellen. Das erfindungsgemäße Verfahren besteht
darin, daß das Schweißwerkzeug nicht jeweils auf alle Schichten
einwirkt. Von zum Beispiel insgesamt vier Schichten werden an
einer zu verschweißenden Stelle die zwei Mittelschichten nur
mit der einen Außenschicht durch das Heizelement erwärmt und
dann mit dem erforderlichen Druck miteinander verbunden. An
einer anderen Stelle werden dann die Mittelschichten nur mit
der anderen Außenschicht verschweißt.

Dieses Verfahren wird erfindungsgemäß dadurch ermöglicht,
daß die Schichten vom Einlauf der Bahnen in die an sich bekannte Vorrichtung zur Herstellung bekannter geschweißter
Verbundstoffe bis zum Schweißwerkzeug durch zwei Vorrichtungselemente auseinandergehalten werden, wobei die Elemente kammartig gestaltet sind und die Längsachsen ihrer Zähne parallel
angeordnet, aber seitlich gegeneinander verschoben sind. Wird
eine Bahn oberhalb dieser Elemente in die Vorrichtung eingeführt, dann verhindern die kammartigen Elemente, daß sich alle drei Schichten berühren. Die Zähne der Elemente erlauben nur den direkten Kontakt von zwei Bahnen an einer bestimmten Stelle. Die dritte Bahn wird durch sie ferngehalten,bis das Schweißwerkzeug passiert ist. Bevorzugt werden die Elemente seitlich soweit gegeneinander verschoben, daß die Zähne des einen Elementes die Zwischenräume zwischen den Zähnen des anderen Elementes voll überdecken.

Die Erfindung wird im folgenden anhand schematischer Zeichnungen näher erläutert:

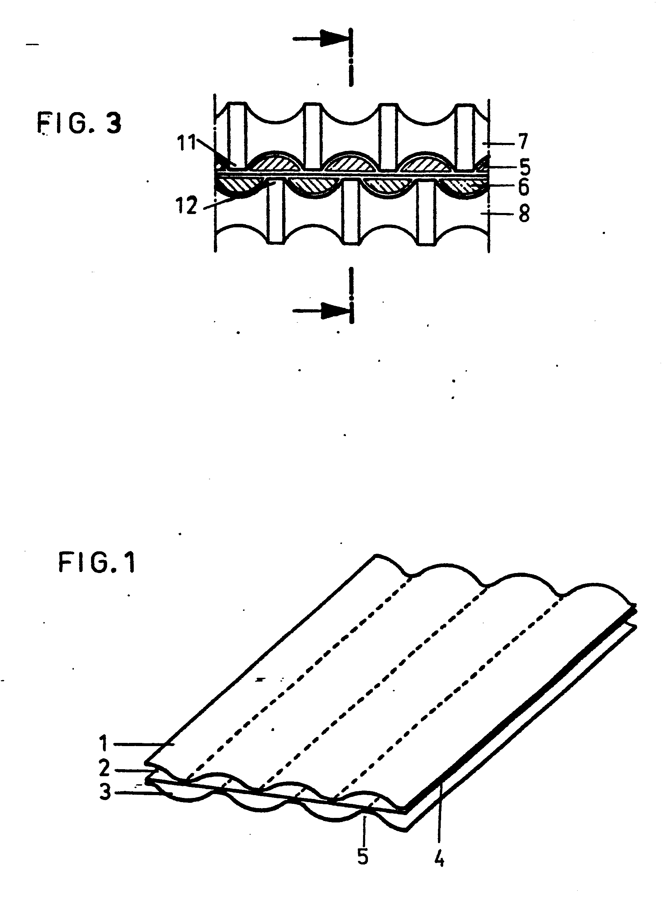

In Figur 1 soll der prinzipielle Aufbau des erfindungsgemäßen Verbundstoffes durch eine Schnittansicht der Quer- und Längsseite dargestellt werden. Der Verbundstoff besteht aus insgesamt drei Schichten, einer oberen Schicht 1, einer mittleren Schicht 2 und einer unteren Schicht 3. In der Schweißnaht 4 sind die Schichten 1 und 2 miteinander verklebt, während die Schicht 3 an dieser Stelle nicht verklebt ist. In der Schweißnaht 5 sind die Schichten 2 und 3 miteinander verbunden. Die Schicht 1 liegt an dieser Stelle ungebunden darüber.

In Figur 2 soll das erfindungsgemäße Herstellungsverfahren dargestellt werden. Sie zeigt eine Schnittansicht durch die erfindungsgemäßen kammartigen Vorrichtungs-Elemente 5 und 6 in Fahrtrichtung. Im unteren Element 6 ist deutlich der zahnartige Teil zu sehen, der über das Einlaufwalzenpaar 7 und 8 hinaus bis zu dem Schweißwerkzeug 9 und 10 reicht. Das obere Element 5 hat an der Querschnittsstelle gerade einen Zwischenraum zwischen den Zähnen. Die Schicht 1 wird oberhalb beider Elemente 5 und 6, die Schicht 2 zwischen 5 und 6 und die Schicht 3 unterhalb von
5 und 6 in die Vorrichtung eingeführt. Die Schicht
3 hat bis nach dem Schweißwerkzeug 9 und 10 keinen
direkten Kontakt zu der Mittelschicht 2 und wird
daher auch nicht mit ihr verbunden.
Die Schichten 1 und 2 werden dagegen von der Einlaufwalze 7 zusammengeführt und von dem Schweißwerkzeug
9 miteinander verschmolzen. Es entsteht die Naht 4.

Figur 3 zeigt eine Schnittansicht durch die erfindungsgemäßen kammartigen Elemente 5 und 6 quer zur Fahrtrichtung, und zwar in Höhe des Einlaufwalzenpaares
7 und 8. Deutlich ist der bereits vorgebildete,
aber noch nicht fixierte Endzustand zu erkennen.
An der Stelle 11 wird die spätere Naht 4 vorgebildet
und bei 12 die spätere Naht 5.

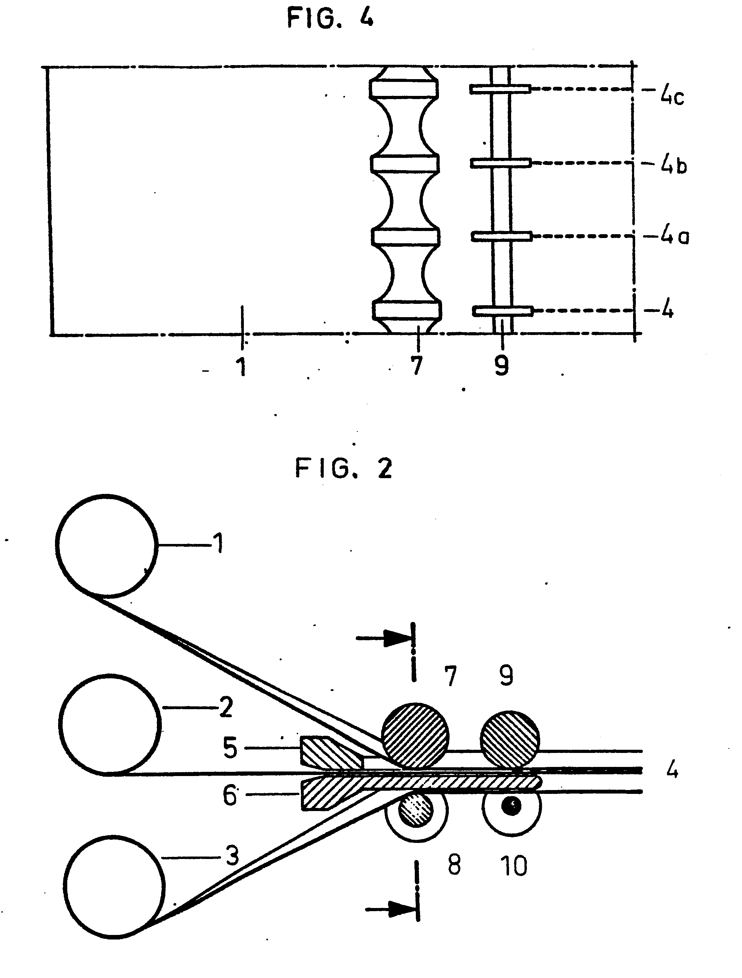

Figur 4 ist die Draufsicht auf die Herstellung gemäß
Figur 2. Die Schicht 1 passiert die Einführungswalze 7 und wird mit dem Schweißwerkzeug 9 mit der
darunterliegenden Schicht 2 verbunden, wobei die
Nähte 4, 4a, 4b und 4c entstehen.

Die Schweißnähte können linienförmige Geraden mit mehr oder
weniger häufigen und weitreichenden Unterbrechungen sein,
also zum Beispiel durchgehende, gestrichelte oder punktierte
Linien.

Der Abstand der Schweißstellen beträgt im allgemeinen
1 bis 10 cm. Er ist in erster Linie danach auszurichten,
wie fest die Schichten verbunden werden sollen und wie
intensiv die Verhärtung des Griffes sein darf. Der Abstand der Schweißnähte ergibt sich im wesentlichen aus dem Abstand der Zähne des kammartigen Elementes.

Selbstverständlich können anstelle der Schichten 1, 2 und 3 jeweils mehrere Schichten eingesetzt werden, z.B. jeweils zwei Schichten oben, drei Schichten in der Mitte und eine Schicht unten.

Bei der Herstellung des erfindungsgemäßen Verbundstoffes können die bisherigen Erfahrungen insbesondere bezüglich der Ausgangsstoffe (z.B. Art, Anzahl, Reihenfolge und Dicke der Schichten; Art der eingesetzten Polymere und der Zusätze) voll genutzt werden. Auch die Schweiß-Verfahren sind im wesentlichen unverändert.

Die mit der Erfindung erzielten Vorteile bestehen insbesondere darin, daß im Verbundstoff keine durchgehenden Schweißstellen vorhanden sind und damit keine Kältebrücken. Der Griff wird weniger stark verhärtet, da die Schweißnähte weniger dick sind. Das Herstellungsverfahren erlaubt die Verwendung auch dicker Schichten, da ja jeweils nur ein Teil aller Schichten verschweißt wird und dementsprechend die Wärme nur durch einen Teil der Schichten geleitet werden muß. Die erfindungsgemäßen Verbundstoffe eignen sich aufgrund ihrer Vorteile insbesondere zur Herstellung von Bekleidung. Bevorzugte Einsatzgebiete sind: Sport-Bekleidung, Winter-Bekleidung, Morgenröcke, Regen-mäntel, Windeln und Matratzenüberzüge.

0099562

Patentansprüche

1. Verbundst .offbahn aus mindestens drei, durch Schweißstellen miteinander verbundenen Schichten, dadurch gekennzeichnet, daß die Schweißstellen jeweils nicht alle Schichten miteinander verbinden und die Verbundstoffbahn nur textile Flächengebilde enthält.

2. Verbundstoffbahn nach Anspruch 1, dadurch gekennzeichnet, daß alle Schichten mindestens 10 Gew.-% des bindenden Polymeren enthalten.

3. Verbundstoffbahn nach den Ansprüchen 1 oder 2, dadurch gekennzeichnet, daß sie Polymere unterschiedlichen Schmelzbereiches enthält und das Polymere mit dem niedrigeren Schmelzbereich die Schichten miteinander verbindet.

4. Verbundstoffbahn nach den Ansprüchen 1, 2 oder 3, dadurch gekennzeichnet, daß die Schichten Polyamid und/oder Polyester enthalten.

5. Verbundstoffbahn nach den Ansprüchen 1, 2, 3 oder 4, dadurch gekennzeichnet, daß die Schichten Polycaprolactam, Polyhexamethylenadipamid, Polyäthylenterephthalat und/oder Polybutylenterephthalat enthalten.

6. Verfahren zur Herstellung der Verbundstoffbahn nach einem
   der Ansprüche 1 bis 5, dadurch gekennzeichnet, daß das
   Schweißwerkzeug nicht jeweils auf alle Schichten einwirkt.

7. Verfahren nach einem der Ansprüche 1 bis 6, dadurch gekennzeichnet, daß die Schichten vom Einlauf der Bahnen in die
   an sich bekannte Vorrichtung bis zum Schweißwerkzeug durch
   zwei Elemente auseinandergehalten werden, wobei die Elemente kammartig gestaltet sind und die Längsachsen ihrer Zähne parallel seitlich gegeneinander verschoben sind.

8. Verwendung der Verbundstoffbahnen nach einem der Ansprüche
   1 bis 5 zur Herstellung von Bekleidung.

FIG. 3

FIG.1

0099562
A3GW32026 EP

FIG. 4

FIG. 2